## Europäisches Patentamt

## European Patent Office

## Office européen des brevets

(11) Veröffentlichungsnummer: **0 343 407**

**A1**

(12) **EUROPÄISCHE PATENTANMELDUNG**

(21) Anmeldenummer: **89108086.3**

(22) Anmeldetag: **05.05.89**

(51) Int. Cl.⁴: **B01J 8/00 , F26B 17/10 , F26B 3/08 , F27D 3/10**

(30) Priorität: **11.05.88 DD 315665**

(43) Veröffentlichungstag der Anmeldung:
**29.11.89 Patentblatt 89/48**

(84) Benannte Vertragsstaaten:
**AT BE CH DE ES FR GB GR IT LI LU NL SE**

(71) Anmelder: **WAAGNER-BIRO AKTIENGESELLSCHAFT**
**Stadlauer-Strasse 54 Postfach 11**
**A-1221 Wien(AT)**

Anmelder: **ORGREB-INSTITUT FÜR KRAFTWERKE**

**Vetschau 7544(DD)**

(72) Erfinder: **Möller, Burckhard, Dr.-Ing.**
**Feuerbachstrasse 20**
**DD-8020 Dresden(DD)**
Erfinder: **Wolf, Bodo, Dr.-Ing.**
**Forstweg 9**
**DD-8210 Freital(DD)**
Erfinder: **Beckmann, Georg, Dipl.Ing.Dr.**
**Jacquingasse 55**
**A-1030 Wien(AT)**
Erfinder: **Bellay, Walter**
**Minciostrasse 35/3/6/19**
**A-1150 Wien(AT)**
Erfinder: **Geyer, Jürgen, Dr.-Ing.**
**Räcknitzhöhe 32**
**DD-8020 Dresden(DD)**
Erfinder: **Rüger, Dietmar, Dipl. Ing.**
**Cäcilienstrasse 11**
**DD-8020 Dresden(DD)**

(74) Vertreter: **Wallner, Gerhard, Dipl.-Ing.**
**c/o Waagner-Biro Aktiengesellschaft**
**Patentabteilung Stadlauer-Strasse 54**
**Postfach 11**
**A-1221 Wien(AT)**

(54) **Vorrichtung zur Einbringung des zu verwirbelnden Gutes in ein Wirbelbett, insbesondere Trocknungsanlage.**

(57) Zur gleichmäßigen Verteilung des zu verwirbelnden Gutes (Rohfeinkohle) in die Mischungszone eines Wirbelbettes ist unterhalb einer Zellradschleuse
2 eine Pendelschurre 4 vorgesehen, die den jeweiligen Zelleninhalt einer Zellradschleuse gleichmäßig
auf die Oberfläche des Mischungsraumes aufbringt,
worauf die Durchmischung des Wirbelbettes erfolgt.
Die Pendelschurre 4 ist dampfbeheizt und an einem
Schwenklager 6 angeordnet, wobei die Rutschbleche
V-förmig angeordnet sind und bis in die Nähe der
Oberfläche der Wirbelschicht reichen. Zur Vergrößerung und Vergleichmäßigung der Wirbelschicht ist
diese in Modulbauweise gestaltet. Die Erfindung ermöglicht ferner eine gleichartige Bedienung der einzelnen Wirbelbettmodulen, so daß die Leistung des
Gesamtwirbelbettes optimal ausgelegt ist.

Fig. 1

# Vorrichtung zur Einbringung des zu verwirbelnden Gutes in ein Wirbelbett, insbesondere Trocknungsanlage

Die Erfindung betrifft eine Vorrichtung zur Einbringung des zu verwirbelnden Gutes in die Mischungszone eines Wirbelbettes mit einer oberhalb des Wirbelbettes angeordneten Zellradschleuse, insbesondere Eintragsvorrichtung für eine indirekt beheizte Dampfwirbelschichttrocknungsanlage in Modulbauweise für Rohfeinkohle.

Bei der Kohlentrocknung ist es bekannt (DD-PS 1.42.086, DD-PS 237.542 und DE-AS 23 42 184), die Kohle mittels einer Zellradschleuse oberhalb eines Wirbelbettes einzuschleusen und in das Wirbelbett einzubringen. Da die Höhe der Wirbelschicht aus verfahrenstechnischen Gründen begrenzt ist, ist es erforderlich, Trocknungsanlagen mit großen Querschnittsflächen zu bauen, um die Wirtschaftlichkeit der Anlage zu gewährleisten. Hiebei treten durch die Anordnung nur einer Zuführungsschleuse Probleme auf, da im Bereich der Aufgabe die Wirbelschicht zum Erliegen kommt. Es ist daher aus der DD-PS 253.472 eine Vorrichtung zur Verteilung von Rohfeinkohle in einem Wirbelschichttrockner bekannt, die aus dem Trogkettenförderer besteht, der die Kohle innerhalb der Trocknungsanlage verteilt. Der Nachteil dieser Vorrichtung ist, daß dieser Trogkettenförderer die Kohle praktisch über die gesamte Länge des Trockners transportiert, wobei die Fallöcher durch die feuchte Rohfeinkohle sich während des Betriebs teilweise zusetzen und somit keine gleichmäßige Verteilung der Kohle gewährleistet werden kann.

Es ist daher ein Ziel der Erfindung, unter Vermeidung von zu aufwendiger Mechanik das zu trocknende Gut möglichst gleichmäßig über den gesamten Eintragsquerschnitt der Wirbelschichttrocknungsanlage zu verteilen, um örtliche Überlastungen zu vermeiden.

Die Erfindung ist dadurch gekennzeichnet, daß im Raum zwischen Zellradschleuse und der freien Oberfläche des Wirbelbettes eine Pendelschurre vorgesehen ist, die einen abgegrenzten Mischungsraum des Wirbelbettes bestreicht. Insbesondere besteht die Pendelschurre aus zwei dampfbeheizten an einem Schwenklager V-förmig angeordneten Blechen, wobei vorzugsweise die Achse der Zellradschleuse und das Schwenklager der Pendelschurre aufeinander normal stehen und zueinander windschief angeordnet sind. Weitere wesentliche Erfindungsmaßnahmen sind in den Unteransprüchen 4 bis 9 angegeben.

Die Erfindung wird in Form von zwei Beispielen in 3 Figuren beschrieben und schematisch illustriert.

Fig. 1 zeigt eine Trocknungsanlage in Modulbauweise, bei der vier Wirbelbetttrockner durch zwei Eintragsvorrichtungen und eine gemeinsame Abgasentsorgung bedient werden.

Fig. 2 zeigt in der Teilfigur 2a (links) einen Wirbelbetttrockner mit einem rohrförmigen Heizregister und in Fig. 2b mit einem plattenförmigen Heizregister 12', wobei ein spezielles Eintragswirbelbett unter Bildung eines Mischungsraumes verwendet wird.

Fig. 3 zeigt einen Schnitt durch die Pendelschurre gemäß Schnittlinie II - II in Fig. 2.

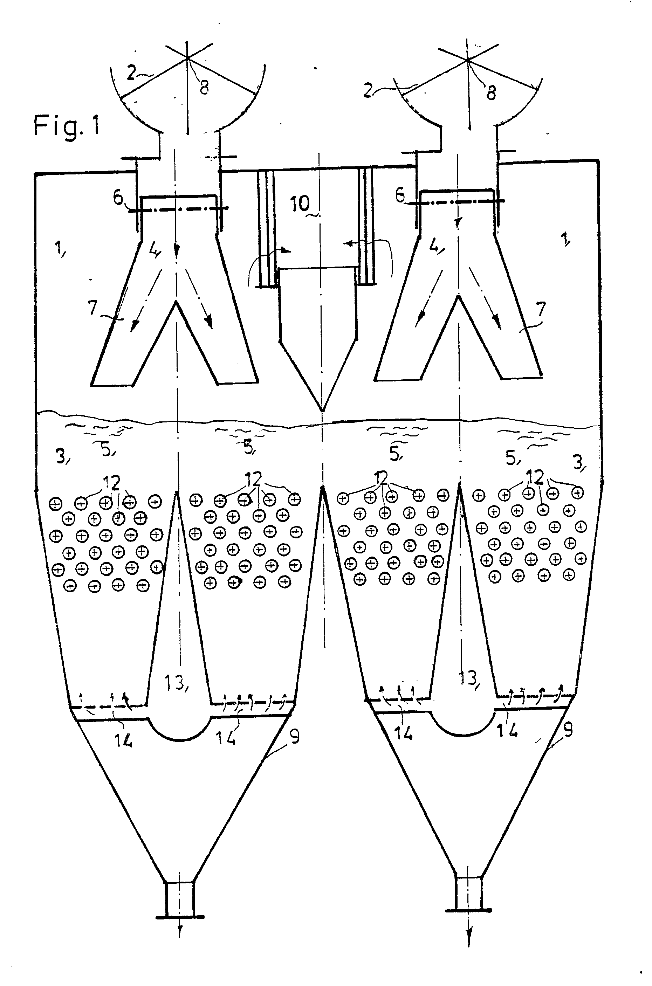

In Fig. 1 ist eine vierteilige Wirbelbetttrocknungsanlage im Aufriß geoffenbart, bei der die Kohle über eine Zellradschleuse 2 in ein Wirbelbett 3 eingebracht wird, wobei eine Pendelschurre 4 vorgesehen ist, die eine gleichmäßige Verteilung des zu verwirbelnden Gutes im Wirbelbett ermöglicht, ohne daß es zu lokalen Anhäufungen kommt. Zu diesem Zweck ist die Pendelschurre 4 mechanisch angetrieben, wobei die Pendelbewegung durch eine Kurvenschablone um das Schwenklager 6 gesteuert wird. Die Pendelschurre 4 und die Achse der Zellradschleuse in einander kreuzend angeordnet, so daß jeder Zelleninhalt der Zellradschleuse durch die pendelnde Bewegung der Schurre über die Oberfläche des Mischungsraumes 5 des Wirbelbettes 3 verteilt wird. Die Zellradschleuse 2 ist so montiert, daß der parabelförmige Massenfluß mit seinem Maximum auf die Mitte des Schwenklagers 6 fällt, wodurch es zur dargestellten exzentrischen Anordnung kommt, damit jeder Mischungsraum 5 jedes Wirbelbettes 3 etwa gleich versorgt wird. Der Mischungsraum sollte frei von Heizflächen 12 sein, so daß eine Überflutung der Heizflächen zumindest in diesem Bereich möglich ist. Die Pendelschurre 4 besteht aus dampfbeheizten Blechwänden 7, wodurch Anbackungen weitgehend vermieden werden können. Das Fluidisierungsmittel für die Wirbelbettanlage wird durch die Kanäle 13 eingebracht und über die Verteilkanäle 14 im Wirbelbett verteilt. Das Fluidisierungsmedium steigt von diesen Verteilkanälen 14 zu den Heizflächen empor, fluidisiert das zu behandelnde Gut und sammelt sich im Freiraum 1 oberhalb des Wirbelbettes, von wo es über den Abdampfkanal 10 nach einer Trockenreinigung abgeführt und eventuell nach einer Auskondensation der aufgenommenen Feuchtigkeit in die Kanäle 13 rezirkuliert wird. Der Abdampfkanal 10 ist dabei zentral angeordnet, so daß er mehrere Wirbelbettanlagen bedienen kann, wobei es durchaus wünschenswert ist, daß derselbe in die Wirbelschicht eintaucht und so den Wirbelschichtapparat in zwei gleich große Teilapparate unterteilt, die durch getrennte Zellradschleusen bedient werden. Die Abführung des behandelten, insbesondere getrockneten Gutes erfolgt über den Austragstrichter 9. Zur Vermeidung der Staubbelastung im Abdampfkanal sind die Eintragsöffnungen des Abdampfkanals mit einem Zaun von Prallelementen, vorzugsweise in mehreren Ebenen, abgedeckt, so daß ein Großteil des erzeugten Staubes am Eintritt in den Dampfkanal gehindert wird und von den Prallelementen in das Wirbelbett rückgeführt wird, wobei die Rückbringung in wenig beheizte Zonen, also in nach abwärts führenden Strömungen, erfolgt. Derartige Trockner eignen sich besonders zur Trocknung von Rohfeinkohle mit einer Körnung von 0 bis 6 mm.

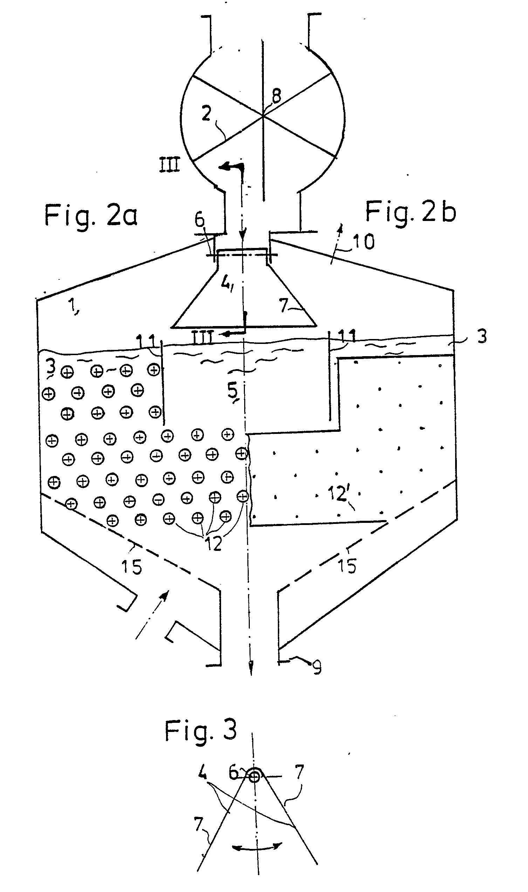

In Fig. 2 ist im Gegensatz zur Fig. 1 der Mischungsraum 5 im Verhältnis zur Oberfläche des Wirbelbettes klein gehalten und durch Tauchwände 11 begrenzt, wobei die Beheizung im Bereich des Mischungsraumes, insbesondere unterhalb desselben, geringer ist als im sonstigen Raum des Wirbelbettes. Ferner zeigt die Fig. 2 einen Anströmboden 15 zur gleichmäßigen Verteilung des Fluidisierungsmediums über die gesamte Grundfläche des Wirbelbetttrockners unter Freilassung eines Auslauftrichters 9.

**Ansprüche**

1) Vorrichtung zur Einbringung des zu verwirbelnden Gutes in die Mischungszone eines Wirbelbettes mit einer oberhalb des Wirbelbettes angeordneten Zellradschleuse, insbesondere Eintragsvorrichtung für eine indirekt beheizte Dampfwirbelschichttrocknungsanlage in Modulbauweise für Rohfeinkohle, dadurch gekennzeichnet, daß im Raum (1) zwischen Zellradschleuse (2) und der freien Oberfläche des Wirbelbettes (3) eine Pendelschurre (4) vorgesehen ist, die einen abgegrenzten Mischungsraum (5) des Wirbelbettes (3) bestreicht.

2) Vorrichtung nach Anspruch 1, dadurch gekennzeichnet, daß die Pendelschurre (4) aus zwei dampfbeheizten an einem Schwenklager (6) V-förmig angeordneten Blechen (7) besteht.

3) Vorrichtung nach Anspruch 2, dadurch gekennzeichnet, daß die Achse (8) der Zellradschleuse (2) und das Schwenklager (6) der Pendelschurre aufeinander normal stehen und zueinander windschief angeordnet sind.

4) Vorrichtung nach Anspruch 3, dadurch gekennzeichnet, daß die Achse (8) der Zellradschleuse (2) exzentrisch zur Mitte der Zuführungsöffnung der Pendelschurre angeordnet ist.

5) Vorrichtung nach Anspruch 1, dadurch gekennzeichnet, daß der Raum (1) des Wirbelschichtbehälters durch eine als Abdampfkanal (10) gestaltete, bis zur Oberkante des Wirbelbettes reichende Trennwand in zwei etwa gleich große Kammern unterteilt ist, in denen jeweils eine Pendelschurre (4) vorgesehen ist.

6) Vorrichtung nach Anspruch 5, dadurch gekennzeichnet, daß jede Pendelschurre (4) unabhängig von einander in der jeweiligen Kammer regelbar antreibbar ist.

7) Vorrichtung nach Anspruch 5, dadurch gekennzeichnet, daß der Abdampfkanal mit einem Zaun aus Prallelementen für die Staubabscheidung versehen ist und insbesondere zwischen zwei Pendelschurren (2) etwa in Höhe der Pendelschurren (2) angeordnet ist.

8) Vorrichtung nach Anspruch 1, dadurch gekennzeichnet, daß der Mischungsraum (5) durch Tauchwände (11) an zwei Seiten vom Wirbelbett (3) getrennt ist und im wesentlichen frei von Heizflächen (12) behalten ist, so daß die Heizflächen (12) einen U-förmigen Raum des Wirbelbettes (3) angeordnet sind (Fig.2).

9) Vorrichtung nach Anspruch 1, dadurch gekennzeichnet, daß die Tiefe des Mischungsraumes (5) durch die Überflutung der Heizflächen (12) des Wirbelbettes (3) gegeben ist.

EP 0 343 407 A1

Fig. 1

EP 0 343 407 A1

Fig. 2a    Fig. 2b

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 061 250 (DIDIER-KOGAG HINSELMANN) * Zusammenfassung, Punkten 1,2b; Figur 2 * --- | 1 | B 01 J 8/00 F 26 B 17/10 F 26 B 3/08 F 27 D 3/10 |
| A | PATENT ABSTRACTS OF JAPAN, Band 8, Nr. 218 (C-245)[1655], 4. Oktober 1984; & JP-A-59 104 411 (KAWASAKI SEITETSU K.K.) 16.06.1984 --- | 1 | |
| A,D | DE-A-2 342 184 (WAAGNER-BIRO AG) * Patentansprüche 1-24; Figuren 1-5 * ----- | 1 | |

RECHERCHIERTE SACHGEBIETE (Int. Cl.4)

B 01 J
F 26 B
F 27 D
F 27 B
C 21 B

Der vorliegende Recherchenbericht wurde für alle Patentansprüche erstellt

| Recherchenort | Abschlußdatum der Recherche | Prüfer |
|---|---|---|
| DEN HAAG | 26-09-1989 | MEERTENS J. |